# EUROPÄISCHE PATENTSCHRIFT

(11) **EP 1 661 662 B1**
(45) Veröffentlichungstag und Bekanntmachung des Hinweises auf die Patenterteilung: **24.02.2010**
(21) Anmeldenummer: 05110372.9
(22) Anmeldetag: 04.11.2005
(51) Int. Cl.: B23Q 11/00, B01D 45/16

(54) **Grobabscheider für abgesaugte Materialteilchen**
Coarse separator for sucked dust
Dispositif de séparation grossier pour des particules aspirées

(30) Priorität: 25.11.2004 DE 102004056856
(43) Veröffentlichungstag der Anmeldung: 31.05.2006
(73) Patentinhaber: HILTI Aktiengesellschaft, 9494 Schaan (LI)
(72) Erfinder: Ohlendorf, Oliver, 86899 Landsberg (DE)
(74) Vertreter: Wildi, Roland

(56) Entgegenhaltungen:
- WO-A-03/055574
- DE-A1- 19 827 173
- US-B1- 6 514 131

## Beschreibung

Die Erfindung betrifft einen Grobabscheider, mit dem durch ein Werkzeuggerät abgetragene und durch eine Absauganordnung abgesaugte Materialteilchen zumindest teilweise von einem Luftstrom trennbar sind. Der Grobabscheider weist hierzu eine Eintrittsöffnung auf, die mit einem Saugkopf der Absauganordnung verbindbar ist.

Ferner weist der Grobabscheider eine Austrittsöffnung auf, über die der gereinigte Luftstrom aus einem Abscheidergehäuse des Grobabscheiders ableitbar ist und die mit einem Feinabscheider verbindbar ist.

Zwischen der Eintrittsöffnung und der Austrittsöffnung ist zudem eine Abscheideeinrichtung angeordnet, die einen die Trägheit der Materialteilchen nutzenden Lamellenabscheider mit mehreren, bezogen auf eine Eintrittsrichtung des Luftstromes hintereinander angeordneten parallelen Lamellen aufweist.

Derartige Grobabscheider dienen vorrangig zum Abscheiden von Partikeln mit einem Durchmesser von mindestens 10 µm und können dauerhaft oder abnehmbar an dem Werkzeuggerät angebracht sein oder über eine Saugleitung mit einem am Werkzeuggerät befestigten Saugkopf verbunden sein.

Aus der DE 198 27 173 ist eine Abscheidevorrichtung für eine Handwerkzeugmaschine bekannt, die einen als Zyklonabscheider ausgeformten Abscheider vorsieht. Die Abscheidevorrichtung besteht im Wesentlichen aus einem Zuführrohr, das in eine zylindrische Vorkammer mündet. Diese ist innerhalb eines zylindrischen Auffangbehälters angeordnet, in dem sich die abgetrennten Materialteilchen ansammeln können. Zum Abführen der teilweise gereinigten Luft ist ein Tauchrohr vorgesehen, das von oben in die Vorkammer hinein ragt.

Nachteilig an der bekannten Abscheideanordnung ist, dass diese zur Gewährleistung eines ausreichenden Abscheidegrades einen relativ grossen benötigten Bauraum aufweist. Dabei ist der Abscheideanordnung eine relativ sperrige Geometrie vorgegeben. Insgesamt führt dies insbesondere bei in das Werkzeuggerät integrierten Abscheideanordnungen zu einer schlechten Handhabung.

US 6,514,131 B1 zeigt ein Schleifgerät mit einer Absaugvorrichtung, die im Betrieb einen Luftstrom zu einem Staubbehälter erzeugt. Dieser Luftstrom durchströmt ein im Staubbehälter gehaltenes Filterelement, wobei mitgeführte Partikel zurückgehalten werden, und tritt über eine Vielzahl von Austrittsöffnungen aus dem Staubbehälter aus. In einer Ausführungsform ist dabei das Filterelement an einer Oberseite des Staubbehälters gehalten, dem an einer gegenüberliegenden Unterseite des Staubbehälters eine die Trägheit der Materialteilchen nutzende Abscheideeinrichtung mit mehreren, bezogen auf eine Eintrittsrichtung des Luftstromes hintereinander parallel angeordneten, lamellenförmigen Staubleitstege vorgeschaltet ist.

Der vorliegenden Erfindung liegt die Aufgabe zugrunde, die genannten Nachteile zu vermeiden und eine möglichst kompakte Abscheideanordnung bereitzustellen.

Erfindungsgemäss wird die Aufgabe wie im Anspruch 1 auf geführt dadurch gelöst, dass die Abscheideeinrichtung einen Lamellenabscheider aufweist. Durch die Verwendung eines Lamellenabscheiders kann die Form der Abscheideanordnung relativ frei bestimmt werden. Hierdurch wird eine sehr kompakte Form der Abscheideanordnung ermöglicht. Diese lässt sich somit besser in die Absauganordnung integrieren beziehungsweise kann derart am Werkzeuggerät angebracht werden, dass dessen Handhabbarkeit im Betrieb nicht negativ beeinflusst wird.

An einer von der Eintrittsöffnung abgewandten Seite des Lamellenabscheiders ist ein Öffnungsbereich eines Fangraumes vorgesehen. Durch den Fangraum wird eine sichere und ausreichend dimensionierte Aufnahme für die am Lamellenabscheider abgetrennten Materialteilchen ermöglicht.

Dabei ist es vorteilhaft, wenn der Fangraum lediglich an dem Öffnungsbereich geöffnet ist. Durch die strömungsmässig einseitige Öffnung des Fangraumes sorgt der über die Eintrittsöffnung eintretende Luftstrom in dem Fangraum für einen Aufstau von Luft. Dieser Aufstau von Luft bewirkt eine zumindest teilweise Kurzschlussströmung des Luftstromes vom Eintrittsbereich um die Lamellen des Lamellenabscheiders herum zur Austrittsöffnung. Dabei werden insbesondere die schwereren Partikel auf Grund ihrer Trägheit vom Luftstrom getrennt und sammeln sich in dem Fangraum an. Bei dieser Vorgehensweise benötigt die Abscheideanordnung besonders wenig Bauraum und kann relativ kostengünstig hergestellt werden.

Vorteilhafterweise sind in dem Fangraum Rückhaltemittel vorgesehen, über die eine Verlagerung von im Fangraum gesammelten Materialteilchen in Richtung des Öffnungsbereiches blockierbar ist. Hierdurch wird vermieden, dass die bereits im Fangraum gesammelten Partikel infolge von im Betrieb auftretenden Verdrehungen des Werkzeuggerätes beziehungsweise der Abscheideanordnung oder durch betriebsbedingte Stösse oder Vibrationen wieder aus dem Fangraum austreten. Auf diese Weise kann die Abscheidewirkung des Grobabscheiders insgesamt verbessert werden.

Bevorzugterweise sind die Rückhaltemittel dabei durch Fangwände gebildet, die in den Fangraum ragen und zu ihrem freien Ende hin von dem Öffnungsbereich weg geneigt sind. Hierdurch erhält man einfach herzustellende Rückhaltemittel, die einen guten Zutritt der Partikel zum Fangraum erlauben aber gleichzeitig den Austritt versperren.

Zudem weist der Lamellenabscheider vorteilhafterweise mehrere, bezogen auf eine Eintrittsrichtung des Luftstromes hintereinander angeordnete, parallele Lamellen auf. Diese begrenzen seitlich einen Eintrittspfad teilweise gegenüber der Austrittsöffnung, wobei sich der Eintrittspfad zwischen der Eintrittsöffnung und dem Öffnungsbereich des Fangraumes erstreckt. Dabei schliessen die Lamellen an ihrem dem Eintrittspfad zugewandten Ende mit diesem einen spitzen Winkel ein. Auf diese Weise verhindern die Lamellen einerseits einen seitlichen Austritt zumindest der schwereren im Luftstrom bewegten Partikel aus dem zum Fangraum hin gerichteten Eintrittspfad. Gleichzeitig kann jedoch der Luftstrom, der um die eintrittseitigen Enden der Lamellen herum strömt, zwischen den Lamellen hindurch ohne grösseren Strömungswiderstand zur Austrittsöffnung strömen. Dabei wird eine relativ hohe Abscheidungswirkung bezüglich der im Luftstrom mitgeführten Partikel erzielt. Insgesamt erhält man somit einen hohen Reinigungsgrad bei geringen Strömungsverlusten.

Dabei ist es besonders günstig, wenn die Lamellen an ihrem dem Eintrittspfad zugewandten Ende in die Eintrittsrichtung des Luftstromes gekrümmt sind. Hierdurch kann der Strömungsweg um die Lamellen herum verlängert werden, was den Abscheidegrad des Lamellenabscheiders erhöht.

Vorteilhafterweise steht die Eintrittsrichtung des Luftstromes bei der für den Betrieb vorgesehenen Hauptausrichtung des Grobabscheiders in Schwerkraftrichtung. Hierdurch werden die Partikel nicht nur infolge des Luftstromes sondern zusätzlich auch in Folge der Schwerkraft in Richtung des Fangraumes bewegt.

Weiterhin ist es vorteilhaft, wenn die Eintrittsöffnung durch eine beispielsweise als Spaltdüse ausgeformte Düse gebildet ist. Auf diese Weise kann relativ unabhängig von der Leistung eines verwendeten Sauglufterzeugers eine optimale Strömungsgeschwindigkeit eingestellt werden, bei der ein maximaler Wirkungsgrad erzielt wird.

Zudem ist es günstig, wenn ein abnehmbarer Deckel vorgesehen ist, der sowohl den Fangraum zu einer Seite begrenzt, als auch jeweils an eine Stirnseite der Lamellen anlegbar ist. Durch diese Abdeckung der Lamellen und des Fangraumes durch einen gemeinsamen Deckel, sind bei Entleerung des Fangraumes auch gleichzeitig die Lamellen für etwaige Säuberungsmassnahmen zugänglich.

Ferner ist ein Abscheidergehäuse des Grobabscheiders voteilhafterweise an einem Gehäuse des Werkzeuggerätes festlegbar. Hierdurch wird der Grobabscheider im Betrieb mit dem Werkzeuggerät mitgeführt, was einen schnelleren und leichteren Wechsel zwischen verschiedenen Einsatzorten des Werkzeuggerätes erlaubt.

Weiterhin ist es vorteilhaft, wenn die Austrittsöffnung mit einem Feinabscheider verbindbar ist. Auf diese Weise kann der Grobabscheider mit dem Feinabscheider, beispielsweise in Form eines Filterelementes, kombiniert werden, um eine hohe Abscheidewirkung bei verringerter Zusetzung des Feinabscheiders zu ermöglichen. Somit kann die Betriebsdauer, innerhalb derer sich der Feinabscheider zusetzt, verlängert werden und eine verbesserte Abscheidung der Materialteilchen aus dem Luftstrom erzielt werden.

Die Erfindung wird nachstehend anhand eines Ausführungsbeispieles näher erläutert. Es zeigen:
- Fig. 1: eine Ansicht eines Werkzeuggerätes mit einer Absauganordnung, die einen erfindungsgemässen Grobabscheider aufweist,
- Fig. 2: eine Ansicht des Grobabscheiders nach Fig. 1 mit abgenommenem Deckel,
- Fig. 3: eine Seitenansicht auf den Grobabscheider nach Fig. 2 und Fig. 4 in Richtung lll einer Austrittsöffnung und
- Fig. 4: einen Schnitt durch den Grobabscheider in der Ebene IV-IV der Fig. 3.

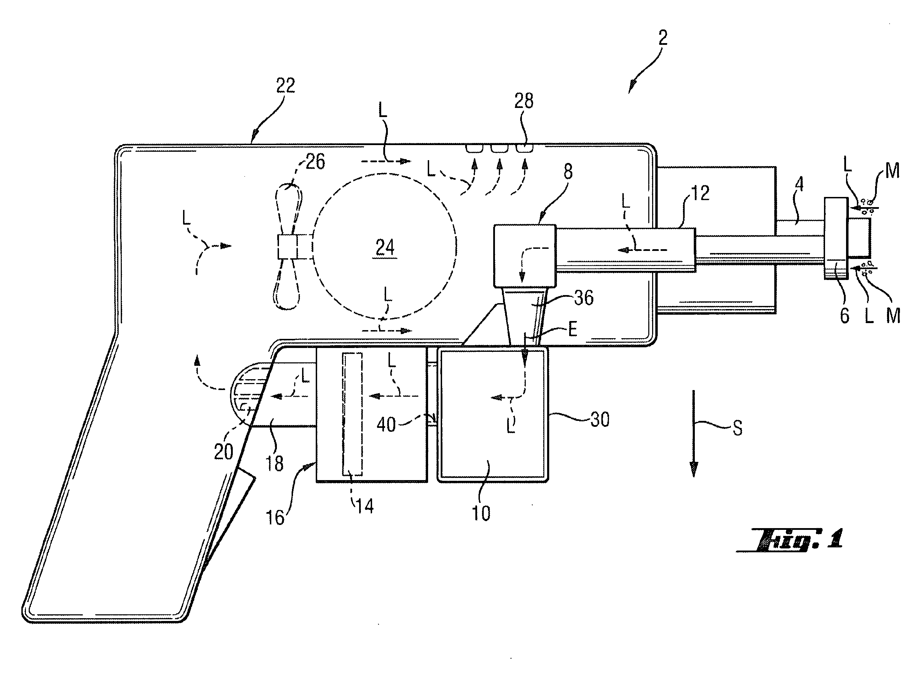

Fig. 1 zeigt ein Werkzeuggerät 2 in Form eines handgeführten Bohr- oder Meisselhammers. Dieser weist ein als Bohrer oder Meissel ausgebildetes Werkzeug 4 auf, zu dem ein Saugkopf 6 einer insgesamt mit 8 bezeichneten Absauganordnung benachbart gehalten ist. Diese Absauganordnung 8 weist einen Grobabscheider 10 auf, der über eine teleskopierbare Verbindungsleitung 12 mit dem Saugkopf 6 verbunden ist. Alternativ zu der gezeigten Ausführungsform kann der Grobabscheider 10 auch passend zur Verwendung an einem handgeführten Säge-, Schneide- oder Schleifwerkzeug ausgebildet sein.

Der Grobabscheider 10 ist zudem mit einem ein Filterelement 14 aufweisenden Feinabscheider 16 verbunden. Der Feinabscheider 16 ist wiederum auf einer von dem Grobabscheider abgewandten Seite über eine Lüfterleitung 18 mit Lüftungsschlitzen 20 verbunden, die in ein Gehäuse 22 des Werkzeuggerätes 2 eingelassen sind. Innerhalb dieses Gehäuses 22 weist das Werkzeuggerät 2 einen mittels eines Motors 24 antreibbaren Lüfter 26 auf. Bei eingeschaltetem Motor 24 erzeugt der Lüfter 26 einen durch Pfeile dargestellten Luftstrom L, der am Saugkopf 6 in die Absauganordnung 8 eintritt und über die Verbindungsleitung 12, den Grobabscheider 10, den Feinabscheider 16, durch die Lüftungsschlitze 20 hin zum Lüfter 26 strömt, der den Luftstrom L vorbei am Motor 24 zu Austrittsausnehmungen 28 des Gehäuses 22 weiterleitet.

Durch diesen Luftstrom L können einerseits Materialteilchen M abgesaugt werden, die im Betrieb durch das Werkzeug 4 aus einem zu bearbeitenden Werkstoff gelöst werden. Andererseits dient der Luftstrom L zur Kühlung des Motors 24.

Der Grobabscheider 10 weist ein quaderförmiges Abscheidergehäuse 30 auf, das an dem Gehäuse 22 des Werkzeuggerätes 2 befestigt ist. Alternativ hierzu kann der Grobabscheider 10 auch als Teil einer vom Werkzeuggerät 2 separaten Absaugvorrichtung ausgebildet sein, die beispielsweise über einen Schlauch mit dem Saugkopf 6 verbunden ist.

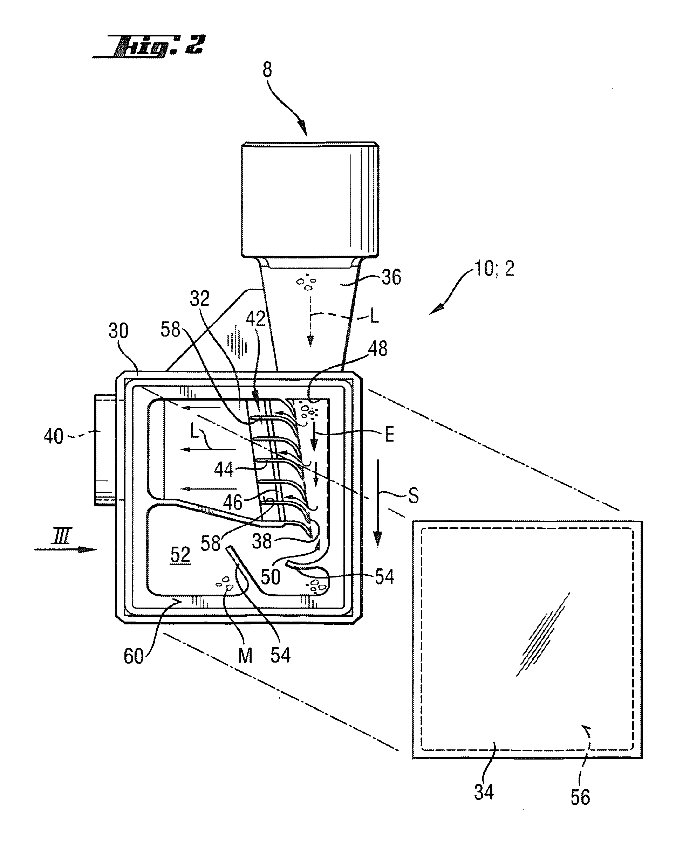

Wie aus Fig. 2 zu entnehmen ist, weist das Abscheidergehäuse 30 einen Innenraum 32 auf, der zu einer Seite hin vollständig durch einen abnehmbaren Deckel 34 des Abscheidergehäuses 30 verschliessbar ist. In den Innenraum 32 mündet eine als Spaltdüse ausgeformte Düse 36, an der die Verbindungsleitung 12 anschliessbar ist.

Die Düse 36 ist in Richtung eines Eintrittspfades 38 gerichtet, der im Innenraum 32 in Richtung einer Austrittsöffnung 40 durch einen insgesamt mit 42 bezeichneten Lamellenabscheider teilweise begrenzt ist.

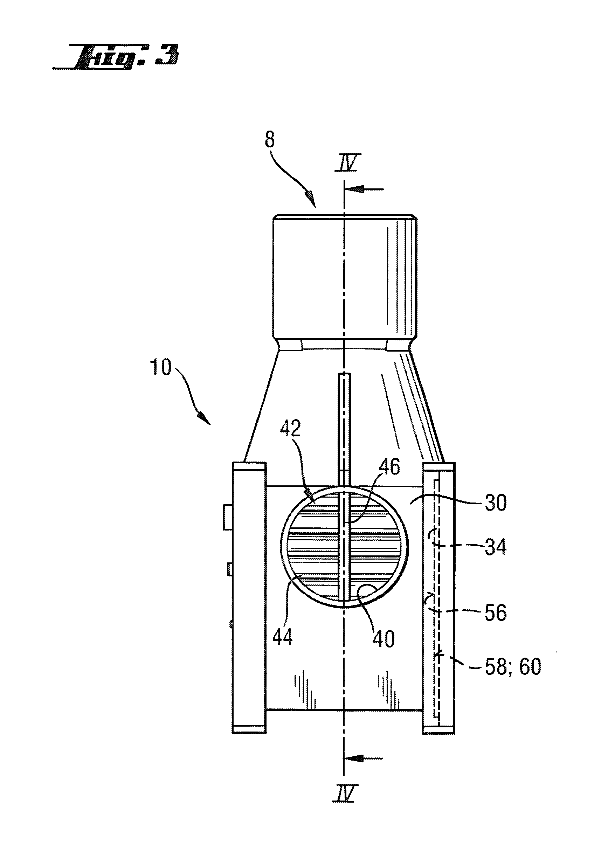

Der Lamellenabscheider 42 weist eine Mehrzahl von parallel angeordneten Lamellen 44 auf, die bezogen auf eine Eintrittsrichtung E des Luftstromes L hintereinander an einem Mittelsteg 46 gehalten sind, wie insbesondere aus Fig. 3 zu entnehmen ist. Dabei sind die Lamellen 44, wie aus Fig. 2 zu entnehmen ist, zu ihrem der Austrittsöffnung 40 zugewandten Ende hin in Richtung der Austrittsöffnung 40 und im Wesentlichen quer zur Eintrittsrichtung E ausgerichtet. Dagegen krümmen sich die Lamellen 44 zu ihrem dem Eintrittspfad 38 zugewandten Ende hin in Richtung der Eintrittsrichtung E.

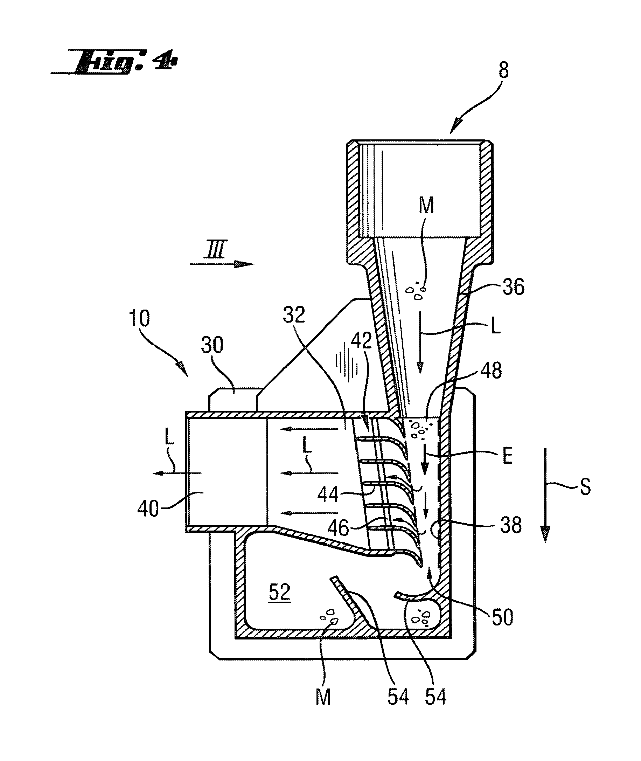

Wie aus Fig. 4 zu entnehmen ist, bildet die Düse 36 eine Eintrittsöffnung 48, die ein erstes Ende des Eintrittspfades 38 definiert. An einem von dem ersten Ende abgewandten zweiten Ende des Eintrittspfades 38 ist ein Öffnungsbereich 50 eines Fangraumes 52 angeordnet. Dieser Fangraum 52 ist bei angebrachtem Deckel 34 lediglich am Öffnungsbereich 50 geöffnet. Von dem Abscheidergehäuse 30 ragen Rückhaltemittel in Form von Fangwänden 54 in den Fangraum 52, die jeweils zu einem freien Ende hin von dem Öffnungsbereich 50 weg geneigt sind.

Der Grobabscheider 10 ist, wie aus Fig. 1 zu entnehmen ist, derart an dem Werkzeuggerät 2 gehalten, dass die Eintrittsrichtung E bei einer Wandanwendung mit im Wesentlichen horizontaler Ausrichtung des Werkzeuggerätes 2, die als Hauptausrichtung des Werkzeuggerätes bezeichnet wird, etwa in Schwerkraftrichtung S gerichtet ist.

Im Betrieb wird das Werkzeug 4 in nicht näher dargestellter Weise durch den Motor 24 angetrieben. Gleichzeitig treibt der Motor 24 dabei den Lüfter 26 an, der den oben beschriebenen Luftstrom L vom Saugkopf 6 zu den Austrittsausnehmungen 28 erzeugt. Mittels des Luftstromes L werden die durch das Werkzeug abgetragenen Materialteilchen M am Saugkopf 6 eingesaugt und über die Verbindungsleitung und die Düse 36 zum Grobabscheider 10 transportiert.

Am Grobabscheider 10 treten die Materialteilchen M in Eintrittsrichtung E über die Eintrittsöffnung 48 in den Eintrittspfad 38 ein, wie insbesondere aus den Fig. 2 und 4 zu entnehmen ist. Der Luftstrom L staut sich währenddessen in dem strömungsmässig nur einseitig geöffneten Fangraum 52 auf, so dass die nachströmende Luft des Luftstromes L zumindest grösstenteils bereits im Eintrittspfad 38 umgelenkt wird und um die eintrittspfadseitigen Enden der Lamellen 44 herum in Richtung der Austrittsöffnung 40 strömt.

Die in diesem Luftstrom L mitgeführten Materialteilchen M bewegen sich dagegen aufgrund ihrer Trägheit und bei der Hauptausrichtung des Werkzeuggerätes 2 zusätzlich aufgrund der Schwerkraft S weiter in Richtung des Öffnungsbereiches 50, über den sie in den Fangraum 52 gelangen. Hier sammeln sich die auf diese Weise durch den Lamellenabscheider 42 vom Luftstrom L getrennten Materialteilchen M im Betrieb an, wobei die Fangwände 54 einen ungewollten Wiederaustritt der Materialteilchen M aus dem Fangraum 52 blockieren.

Zum Entleeren des Fangraumes 52 wird der Deckel 34, wie in Fig. 2 dargestellt, vom Abscheidergehäuse 30 abgenommen. Im angebrachten Zustand, wie in Fig. 3 gezeigt, liegt der Deckel 34 mit einer Innenfläche 56 sowohl an den deckelseitigen Stirnseiten 58 der Lamellen 44 als auch an einer deckelseitigen, inneren Gehäusestirnseite 60 des Abscheidergehäuses 30 an. Somit ist bei abgenommenem Deckel 34 sowohl der Fangraum 52 als auch der Lamellenabscheider 42 für Säuberungsarbeiten zugänglich.

## Patentansprüche

1. Grobabscheider (10),
mit dem durch ein Werkzeuggerät (2) abgetragene und durch eine Absauganordnung (8) abgesaugte Materialteilchen (M) zumindest teilweise von einem Luftstrom (L) trennbar sind und
der eine Eintrittsöffnung (48) aufweist, die mit einem Saugkopf (6) der Absauganordnung (8) verbindbar ist, und
eine Austrittsöffnung (28) aufweist, über die der gereinigte Luftstrom (L) ableitbar ist, sowie
einen zwischen der Eintrittsöffnung (48) und der Austrittsöffnung (40) angeordneten
Lamellenabscheider (42) aufweist,
**dadurch gekennzeichnet, dass** an einer von der Eintrittsöffnung (48) abgewandten Seite des Lamellenabscheiders (42) ein Öffnungsbereich (50) eines Fangraumes (52) vorgesehen ist, wobei der Lamellenabscheider (42) mehrere, bezogen auf eine Eintrittsrichtung (E) des Luftstromes (L) hintereinander angeordnete parallele Lamellen (44) aufweist, die einen Eintrittspfad (38) zwischen der Eintrittsöffnung (48) und dem Öffnungsbereich (50) in Richtung der Austrittsöffnung (40) teilweise seitlich begrenzen.

2. Grobabscheider nach Anspruch 1, **dadurch gekennzeichnet, dass** der Fangraum (52) lediglich an dem Öffnungsbereich (50) geöffnet ist.

3. Grobabscheider nach Anspruch 1 oder 2, **dadurch gekennzeichnet, dass** in dem Fangraum (52) Rückhaltemittel vorgesehen sind, über die eine Verlagerung von im Fangraum (52) gesammelten Materialteilchen (M) in Richtung des Öffnungsbereiches (50) blockierbar ist.

4. Grobabscheider nach Anspruch 3, **dadurch gekennzeichnet, dass** die Rückhaltemittel durch Fangwände (54) gebildet sind, die in den Fangraum (52) ragen une dabei zu ihrem freien Ende hin von dem Öffnungsbereich (50) weg geneigt sind.

5. Grobabscheider nach einem der Ansprüche 1 bis 4, **dadurch gekennzeichnet, dass** die Lamellen an ihrem dem Eintrittspfad (38) zugewandten Ende mit diesem einen spitzen Winkel einschliessen.

6. Grobabscheider nach Anspruch 5, **dadurch gekennzeichnet, dass** die Lamellen (44) an ihrem dem Eintrittspfad (38) zugewandten Ende in die Eintrittsrichtung E) des Luftstromes (L) gekrümmt sind.

7. Grobabscheider nach Anspruch 5 oder 6, **dadurch gekennzeichnet, dass** die Eintrittsrichtung (E) des Luftstromes (L) bei der für den Betrieb vorgesehenen Haup :ausrichtung des Grobabscheiders (10) in Schwerkraftrichtung (S) steht.

8. Grobabscheider nach einem der Ansprüche 1 bis 7, **dadurch gekennzeichnet, dass** die Eintrittsöffnung (48) durch eine Düse (36) gebildet ist.

9. Grobabscheider nach einem der Ansprüche 1 bis 8, **dadurch gekennzeichnet, dass** ein abnehmbarer Deckel (34) vorgesehen ist, der sowohl den Fangraum (52) zu einer Seite begrenzt, als auch jeweils an eine Stirnseite (58) der Lamellen (44) anlegoar ist.

10. Grobabscheider nach einem der Ansprüche 1 bis 9, **dadurch gekennzeichnet, dass** ein Abscheidergehäuse (30) des Grobabscheiders (10) an einem Gehäuse (22) des Werkzeuggerätes (2) festlegbar ist.

11. Grobabscheider nach einem der Ansprüche 1 bis 10, **dadurch gekennzeichnet, dass** die Austrittsöffnung (40) mit einem Feinabscheider (16) verbindbar ist.

## Claims

1. Coarse separator (10),
with which dust (M) worn away by a tool (2) and sucked through a suction arrangement (8) may be separated at least partly from a stream of air (L) and
which has an inlet opening (48), which may be connected to a suction head (6) of the suction arrangement (8), and
an outlet opening (28), through which the clean stream of air (L) may be removed, as well as
a finned separator (42) arranged between the inlet opening (48) and outlet opening (40),
**characterised in that** an opening area (50) of a collecting space (52) is provided on a side of the finned separator (42) turned away from the inlet opening (48), in which the finned separator (42) has several parallel fins (44) arranged one behind the other with reference to an inlet direction (E) of the stream of air (L), which partly delimit the sides of an inlet path (38) between the inlet opening (48) and the opening area (50) in the direction of the outlet opening (40).

2. Coarse separator according to claim 1, **characterised in that** the collecting space (52) is open only to the opening area (50).

3. Coarse separator according to claim 1 or 2, **characterised in that** means of retention are provided in the collecting space (52), through which a movement of dust (M) collected in the collecting space (52) in the direction of the opening area (50) may be blocked.

4. Coarse separator according to claim 3, **characterised in that** the means of retention are formed by collecting walls (54), which project into the collecting space (52) and at the free end are inclined away from the opening area (50).

5. Coarse separator according to one of claims 1 to 4, **characterised in that** at the end facing the inlet path (38) the fins enclose an acute angle with it.

6. Coarse separator according to claim 5, **characterised in that** at the end facing the entry path (38) the fins (44) are curved in the inlet direction E) of the stream of air (L).

7. Coarse separator according to claim 5 or 6, **characterised in that** the inlet direction (E) of the stream of air (L) is in the direction of the gravitational force (S) in the main alignment of the coarse separator (10) provided for operation.

8. Coarse separator according to one of claims 1 to 7, **characterised in that** the inlet opening (48) is formed by a nozzle (36).

9. Coarse separator according to one of claims 1 to 8, **characterised in that** a removable cover (34) is provided, which may delimit the collecting space (52) on one side as well as being able to be applied to a face (58) of the fins (44).

10. Coarse separator according to one of claims 1 to 9, **characterised in that** a separator housing (30) of the coarse separator (10) may be fixed to a housing (22) of the tool (2).

11. Coarse separator according to one of claims 1 to 10, **characterised in that** the outlet opening (40) may be connected to a fine separator (16).

## Revendications

1. Séparateur grossier (10) avec lequel des particules de matière (M) enlevées par un appareil (2) et aspirées par un dispositif d'aspiration (8) peuvent être séparées au moins partiellement d'un courant d'air (L) et qui comporte une ouverture d'entrée (48), apte à être reliée à une tête d'aspiration (6) du dispositif d'aspiration (8), et une ouverture de sortie (28), apte à évacuer le courant d'air épuré (L), ainsi qu'un séparateur à lamelles (42) disposé entre l'ouverture d'entrée (48) et l'ouverture de sortie (40), **caractérisé en ce que** sur un côté du séparateur à lamelles (42) situé à l'opposé de l'ouverture d'entrée (48) est prévue une zone d'ouverture (50) d'une chambre de piégeage (52), le séparateur à lamelles (42) comportant plusieurs lamelles parallèles (44) qui sont disposées les unes derrière les autres par rapport à une direction d'entrée (E) du courant d'air (L) et qui délimitent partiellement latéralement un chemin d'entrée (38) entre l'ouverture d'entrée (48) et la zone d'ouverture (50) en direction de l'ouverture de sortie (40).

2. Séparateur grossier selon la revendication 1, **caractérisé en ce que** la chambre de piégeage (52) n'est ouverte qu'au niveau de la zone d'ouverture (50).

3. Séparateur grossier selon la revendication 1 ou 2, **caractérisé en ce que** dans la chambre de piégeage (52) sont prévus des moyens de retenue qui empêchent des particules de matière (M) accumulées dans la chambre de piégeage (52) de se déplacer en direction de la zone d'ouverture (50).

4. Séparateur grossier selon la revendication 3, **caractérisé en ce que** les moyens de retenue sont formés par des cloisons de piégeage (54) qui font saillie dans la chambre de piégeage (52) et dont l'extrémité libre est inclinée à l'opposé de la zone d'ouverture (50).

5. Séparateur grossier selon une des revendications 1 à 4, **caractérisé en ce que** les lamelles forment, à leur extrémité tournée vers le chemin d'entrée (38), un angle aigu avec celui-ci.

6. Séparateur grossier selon la revendication 5, **caractérisé en ce que**, à leur extrémité tournée vers le chemin d'entrée (38), les lamelles (44) sont recourbées dans la direction d'entrée (E) du courant d'air (L).

7. Séparateur grossier selon la revendication 5 ou 6, **caractérisé en ce que**, lorsque le séparateur grossier (10) présente l'orientation générale prévue pour son fonctionnement, la direction d'entrée (E) du courant d'air (L) correspond à la direction gravitationnelle (S).

8. Séparateur grossier selon une des revendications 1 à 7, **caractérisé en ce que** l'ouverture d'entrée (48) est formée par une buse (36).

9. Séparateur grossier selon une des revendications 1 à 8, **caractérisé en ce qu'**il est prévu un couvercle amovible (34) qui délimite la chambre de piégeage (52) d'un côté mais peut aussi être appliqué contre une face frontale (58) des lamelles (44).

10. Séparateur grossier selon une des revendications 1 à 9, **caractérisé en ce qu'**un carter de séparateur (30) du séparateur grossier (10) peut être assujetti à un carter (22) de l'appareil (2).

11. Séparateur grossier selon une des revendications 1 à 10, **caractérisé en ce que** l'ouverture de sortie (40) peut être reliée à un séparateur fin (16).
